# EUROPÄISCHE PATENTSCHRIFT

(11) **EP 3 890 928 B1**
(45) Veröffentlichungstag und Bekanntmachung des Hinweises auf die Patenterteilung: **12.11.2025**
(21) Anmeldenummer: 19829156.9
(22) Anmeldetag: 19.12.2019
(51) Int. Cl.: B25J 9/16, G05B 19/4061

(54) **KRAFTBEGRENZTES VERFAHREN MINDESTENS EINES ELEMENTS EINER PRODUKTIONSMASCHINE IM MANUELLEN BETRIEB**
FORCE-LIMITED METHOD OF AT LEAST ONE ELEMENT OF A PRODUCTION MACHINE IN MANUAL OPERATION
PROCÉDÉ À LIMITATION DE LA FORCE D'AU MOINS UN ÉLÉMENT D'UNE MACHINE DE PRODUCTION EN FONCTIONNEMENT MANUEL

(30) Priorität: 04.02.2019 EP 19155244
(43) Veröffentlichungstag der Anmeldung: 13.10.2021
(73) Patentinhaber: Siemens Aktiengesellschaft, 80333 München (DE)
(72) Erfinder: BRETSCHNEIDER, Jochen, 88696 Owingen (DE); MIHATSCH, Steffen, 71272 Renningen (DE); WEBER, Curd, 75056 Sulzfeld (DE)
(74) Vertreter: Siemens Patent Attorneys
(86) Internationale Anmeldenummer: PCT/EP2019/086166
(87) Internationale Veröffentlichungsnummer: WO 2020/160829

(56) Entgegenhaltungen:
- DE-A1- 102005 015 317
- DE-A1- 102015 012 230
- DE-A1- 102016 210 060
- DE-A1- 102017 005 581
- US-A1- 2014 379 126
- HEIKO SCHMIRGEL ET AL: "Tuning - Antriebsinterne Frequenzanalyse", 1 September 2018 (2018-09-01), 40880 Ratingen, Deutschland, XP055764755, Retrieved from the Internet <URL:https://www.kollmorgen.com/de-de/developer-network/tuning-antriebsinterne-frequenzanalyse/> [retrieved on 20210113]

## Beschreibung

Die vorliegende Erfindung geht aus von einem Betriebsverfahren für eine Produktionsmaschine,
- wobei eine Steuereinrichtung der Produktionsmaschine von einem Bediener der Produktionsmaschine in einem manuellen Betrieb der Produktionsmaschine über eine Eingabeeinrichtung einer Mensch-Maschine-Schnittstelle eine momentane Bahn und einen Fahrbefehl entgegennimmt,
- wobei mindestens ein Element der Produktionsmaschine mittels lagegeregelte Achsen entlang der momentanen Bahn in einer Verfahrrichtung verfahren werden soll,
- wobei die Steuereinrichtung aufgrund des Fahrbefehls eine Abfolge von Lagesollwerten für die Achsen ermittelt,
- wobei die Lagesollwerte mit einer Sollgeschwindigkeit in der Verfahrrichtung entlang der momentanen Bahn fortschreiten,
- wobei die Steuereinrichtung anhand der Lagesollwerte und korrespondierender Lageistwerte Steuerbefehle für die Achsen antreibende Antriebe ermittelt und die Antriebe entsprechend ansteuert,
- wobei die Steuereinrichtung die Steuerbefehle derart ermittelt, dass eine Kontaktkraft, mit der das mindestens eine Element auf seine Umgebung einwirkt, auf einen der Steuereinrichtung vorgegebenen Kraftgrenzwert begrenzt wird.

Die vorliegende Erfindung geht weiterhin aus von einem Steuerprogramm für eine Steuereinrichtung einer Produktionsmaschine, wobei das Steuerprogramm Maschinencode umfasst, der von der Steuereinrichtung abarbeitbar ist, wobei die Abarbeitung des Maschinencodes durch die Steuereinrichtung bewirkt, dass die Steuereinrichtung die Produktionsmaschine gemäß einem derartigen Betriebsverfahren betreibt.

Die vorliegende Erfindung geht weiterhin aus von einer Steuereinrichtung für eine Produktionsmaschine, wobei die Steuereinrichtung mit einem derartigen Steuerprogramm programmiert ist, so dass die Steuereinrichtung im Betrieb eine Produktionsmaschine gemäß einem derartigen Betriebsverfahren betreibt.

Die vorliegende Erfindung geht weiterhin aus von einer Produktionsmaschine, wobei die Produktionsmaschine mindestens eine lagegeregelte Achse aufweist, mittels derer mindestens ein Element der Produktionsmaschine lagegeregelt verfahren wird, wobei die Produktionsmaschine von einer derartigen Steuereinrichtung gesteuert wird.

Bei numerisch gesteuerten Werkzeugmaschinen und anderen numerisch gesteuerten Produktionsmaschinen ist der manuelle Betrieb bekannt. Im manuellen Betrieb verfährt der Bediener der Produktionsmaschine die Maschinenachsen durch manuelle Vorgabe von Fahrbefehlen. Das Verfahren kann sowohl einzeln für jeweils eine Achse als auch im Verbund erfolgen. Der manuelle Betrieb kann beispielsweise beim Einrichten, beim Vermessen oder im Einzelsatzbetrieb angenommen werden.

Beim manuellen Verfahren kann es leicht geschehen, dass der Bediener die Produktionsmaschine in eine unübersichtliche Situation manövriert, in der nicht ohne weiteres ersichtlich ist, wie man diese Situation wieder verlassen kann. Insbesondere wenn das verfahrene Element der Produktionsmaschine ein anderes Element der Produktionsmaschine bereits berührt oder nahezu berührt, können oftmals bereits sehr kleine Bewegungen zu Schäden an der Produktionsmaschine oder einem Werkstück führen, das mittels der Produktionsmaschine gehandhabt wird. Derart unerwünschte Kollisionen sollen zwar nach Möglichkeit vermieden werden, treten aber dennoch manchmal auf.

Im Stand der Technik ist bekannt, die Verfahrbewegung nach Art einer Historie aufzuzeichnen, so dass im Falle einer Kollision auf exakt dem gleichen Weg, auf dem eine Position angenommen wurde, auch wieder zum Ausgangspunkt zurück gefahren werden kann (Retract). Diese Vorgehensweise ist nicht immer möglich und auch nicht immer praktikabel. Insbesondere in Fällen, in denen es bereits zu einem Kontakt zwischen verschiedenen Elementen und dadurch beispielsweise zum Verbiegen von Elementen gekommen ist, kann auch diese Vorgehensweise versagen.

Eine weitere Möglichkeit besteht darin, parallel mit dem Verfahren eine Kollisionsrechnung mit einem virtuellen Maschinenmodell durchzuführen. Dies erfordert zum einen die erforderliche Rechenleistung. Zum anderen muss das Modell vollständig und korrekt sein. Insbesondere in Fällen, in denen bereits eine Kollision erfolgt ist und aufgrund der Kollision ein Verbiegen von Elementen aufgetreten ist, ist auch mit dieser Vorgehensweise kein zuverlässiger Schutz mehr gegeben. Weiterhin ist eine derartige Kollisionsrechnung nicht bei allen Produktionsmaschinen vorhanden.

Im Stand der Technik bleibt dem Bediener der Produktionsmaschine im Ergebnis daher oftmals lediglich die Möglichkeit, sich mit großer Vorsicht und Umsicht zu verhalten und das Element wieder aus der komplexen Situation herauszufahren. Die Anwahl einer einzigen falschen Bewegungsrichtung mit nachfolgendem Verfahren des Elements kann hierbei fatal sein. Es besteht daher ein hohes Risiko von Bedienungsfehlern. Dies gilt ganz besonders, wenn die Situation vom Bediener schlecht einsehbar ist, was oft der Fall ist.

Aus der DE 10 2015 012 230 A1 ist eine Robotersteuerung bekannt, die mehrere lagegeregelte Achsen aufweist. Bei der DE 10 2015 012 230 A1 erfolgt insbesondere in einem dort als solchen bezeichneten Rückkehrbetrieb ein lagegeregeltes Verfahren von einer Position A an eine Position B, wobei während des Verfahrens von der Position A zur Position B eine Drehmomentbegrenzung wirkt. Die Position A wurde zuvor von einem Bediener manuell angefahren. Die Position B ergibt sich durch ein Programm, das eine Abfolge von Positionen aufweist. Die Position B wird, ausgehend von der Position A, angefahren, sowie der Bediener das Verfahren freigibt.

Aus der DE 10 2017 005 581 A1 ist ein Betriebsverfahren für einen Roboter bekannt, bei dem eine Sollkraft vorgegeben wird, mit der auf eine Kontaktstelle eingewirkt werden darf, und wobei weiterhin der Roboter abgebremst wird, noch bevor diese Sollkraft erreicht wird.

Aus der DE 10 2016 210 060 A1 sind Manipulatorsysteme bekannt, bei denen Manipulatoren direkt von einem Menschen bedient werden. Die Manipulatoren können lagegeregelt und gleichzeitig kraftbegrenzt verfahren werden.

Aus der DE 10 2005 015 317 A1 ist eine Produktionsmaschine bekannt, bei der die Maschinenelemente Elemente lagegeregelt verfahren werden und auf Kollision erkannt wird, sobald eine auf das Maschinenelement einwirkende Kraft einen Kraftgrenzwert übersteigt.

Aus der Veröffentlichung Heiko Schmirgel et al.: "Tuning - Antriebsinterne Frequenzanalyse", Kollmorgen Deutschland GmbH, 40880 Ratingen, Deutschland, XP055764755 / 1. September 2018, ist ein Servoregler in einer Regelkaskade bekannt, bei der der innerste Regelkreis das Drehmoment bzw. die Kraft, der überlagerte Kreis die Drehzahl, oder bei Linearantrieben die Geschwindigkeit, und der äußere Kreis die Lage bzw. die Position regelt. Da der Strom proportional zum Drehmoment bzw. zur Kraft ist, bildet die Kaskade die mechanischen Zusammenhänge ab. In jeder Ebene des kaskadierten Regelsystems können die einzelnen Regelgrößen in ihrem Betrag begrenzt und so an die elektrischen und mechanischen Maximalwerte des Antriebs und der Anlage angepasst werden.

Die Aufgabe der vorliegenden Erfindung besteht darin, einfach realisierbare Möglichkeiten zu schaffen, mittels derer Schäden an Elementen der Produktionsmaschine zuverlässig vermieden werden können.

Die Aufgabe wird durch ein Betriebsverfahren mit den Merkmalen des Anspruchs 1 gelöst. Vorteilhafte Ausgestaltungen des erfindungsgemäßen Betriebsverfahrens sind Gegenstand der abhängigen Ansprüche 2 bis 11.

Erfindungsgemäß wird ein Betriebsverfahren der eingangs genannten Art dadurch ausgestaltet, dass die Steuereinrichtung einen Schleppfehler der Antriebe auf Einhalten eines vorbestimmten Maximalwerts überwacht und bei Erreichen des Maximalwerts ein weiteres Verfahren des mindestens einen Elements der Produktionsmaschine zu unterdrückt.

Dadurch kann auf einfache Weise erkannt werden, wenn das mindestens eine Element der Produktionsmaschine an einem Hindernis angestoßen ist, und hierauf dadurch entsprechend reagiert werden, dass die weitere Vorgabe von fortschreitenden Lagesollwerten eingestellt wird.

Es ist möglich, dass die Kontaktkraft als Betrag begrenzt wird. Alternativ oder zusätzlich ist es möglich, dass die Kontaktkraft komponentenweise für die einzelnen Achsen und/oder komponentenweise für zueinander orthogonale Richtungen begrenzt wird.

Die Steuereinrichtung ermittelt die Steuerbefehle für die Antriebe dadurch ermittelt, dass sie zunächst mittels den Antrieben zugeordneter Lageregler anhand der Lagesollwerte und der korrespondierenden Lageistwerte Geschwindigkeitssollwerte für den Lagereglern unterlagerte Geschwindigkeitsregler ermittelt, sodann anhand der Geschwindigkeitssollwerte und korrespondierender Geschwindigkeitsistwerte Kraftsollwerte für den Geschwindigkeitsreglern unterlagerte und den Antrieben vorgeordnete Kraftregler ermittelt, die Kraftsollwerte auf den vorgegebenen Grenzwert oder einen daraus abgeleiteten Wert begrenzt und die Steuerbefehle für die Antriebe mittels der Kraftregler ermittelt. Auf diese Weise kann die Begrenzung der Kontaktkraft auf den gewünschten Grenzwert auf einfache Weise bewirkt werden. An dieser Stelle sei erwähnt, dass die Geschwindigkeitsregler "echte" Geschwindigkeitsregler sein können. Alternativ kann es sich auch hierzu gleichwertige Regler handeln. In analoger Weise gilt dies auch für die Kraftregler. Auch hier können alternativ hierzu gleichwertige Regler verwendet werden.

Vorzugsweise sind die Lageregler als P-Regler ausgebildet.

Vorzugsweise nimmt die Steuereinrichtung einen Messwert für eine Verfahrkraft entgegen, mit der die Antriebe auf das mindestens eine Element einwirken (also die von den Antrieben tatsächlich ausgeübte Kraft), ermittelt anhand des entgegengenommenen Messwertes die Kontaktkraft und unterdrückt ein weiteres Verfahren des mindestens einen Elements in der Verfahrrichtung, wenn und sobald die ermittelte Kontaktkraft den vorgegebenen Grenzwert erreicht. Dadurch kann auf einfache, schnelle und zuverlässige Weise auf ein Anstoßen des Elements an einem Hindernis reagiert werden.

Im einfachsten Fall wird der Messwert für die Verfahrkraft so, wie er ist, als Kontaktkraft verwertet. Es wird lediglich, soweit erforderlich, eine kinematische Umrechnung vorgenommen. Vorzugsweise ermittelt die Steuereinrichtung jedoch anhand der Lageistwerte der Achsen eine Beschleunigung und/oder die Verfahrgeschwindigkeit des mindestens einen Elements und ermittelt und berücksichtigt bei der Ermittlung der Kontaktkraft einen durch die Beschleunigung und/oder die Geschwindigkeit des mindestens einen Elements hervorgerufenen Kraftanteil. Dadurch kann die Beurteilung, wie groß die tatsächliche Kontaktkraft aktuell ist, verbessert werden.

Vorzugsweise begrenzt die Steuereinrichtung die Sollgeschwindigkeit auf einen der Steuereinrichtung vorgegebenen Geschwindigkeitsgrenzwert. Dadurch wird erreicht, dass eine durch das Verfahren des mindestens einen Elements der Produktionsmaschine aufgebaute kinetische Energie entsprechend gering bleibt.

In einer bevorzugten Ausgestaltung überwacht die Steuereinrichtung die Kontaktkraft und kehrt bei Erreichen des vorgegebenen Kraftgrenzwertes die Verfahrrichtung, eine Richtung der Sollgeschwindigkeit und/oder eine Richtung einer Sollkraft um. Dadurch wird automatisch dem unerwünschten Aufbauen der Kontaktkraft des mindestens einen Elements der Produktionsmaschine mit einem Hindernis entgegengewirkt.

In einer besonders bevorzugten Ausgestaltung der vorliegenden Erfindung ist vorgesehen, dass die Steuereinrichtung die Abfolge von Lagesollwerten und/oder die zugehörigen Lageistwerte temporär in einem Pufferspeicher speichert und dass die Steuereinrichtung in dem Fall, dass sie nach dem Verfahren des mindestens einen Elements der Produktionsmaschine in der Verfahrrichtung das mindestens eine Element der Produktionsmaschine entgegen der Verfahrrichtung verfährt, die in dem Pufferspeicher gespeicherten Lagesollwerte und/oder Lageistwerte in gegenüber dem Speichern invertierter Reihenfolge verwertet. Dadurch kann das Element der Produktionsmaschine auf einfache Weise auf dem richtigen Weg zurückverfahren werden.

Vorzugsweise zeigt die Steuereinrichtung dem Bediener die Kontaktkraft über die Mensch-Maschine-Stelle als Betrag, komponentenweise für die einzelnen Achsen und/oder komponentenweise für zueinander orthogonale Richtungen an. Aufgrund der Anzeige steht dem Bediener der Produktionsmaschine jederzeit eine Information über die auftretende Kontaktkraft zur Verfügung.

Vorzugsweise beaufschlagt die Steuereinrichtung ein Betätigungselement zum Vorgeben des Fahrbefehls mit einer von der Kontaktkraft abhängigen haptisch erfassbaren Rückmeldung. Dadurch steht dem Bediener der Produktionsmaschine jederzeit auch dann eine Information über die auftretende Kontaktkraft zur Verfügung, wenn er den Blick nicht auf eine Anzeigeeinrichtung der Mensch-Maschine-Schnittstelle richten kann.

Es ist möglich, dass die Steuereinrichtung das erfindungsgemäße Verfahren im manuellen Betrieb jederzeit ausführt. Es ist aber ebenso möglich, dass die Steuereinrichtung das erfindungsgemäße Verfahren nur dann ausführt, wenn die Steuereinrichtung zuvor vom Bediener über die Mensch-Maschine Schnittstelle einen Aktivierungsbefehl entgegengenommen hat, und anderenfalls das mindestens eine Element der Produktionsmaschine ohne Begrenzung der Kontaktkraft auf den Kraftgrenzwert verfährt. Dadurch kann - je nach Lage des Einzelfalls - ein schnelleres Verfahren des Elements der Produktionsmaschine bewirkt werden.

Die Aufgabe wird weiterhin durch ein Steuerprogramm mit den Merkmalen des Anspruchs 12 gelöst. Erfindungsgemäß wird ein Steuerprogramm der eingangs genannten Art derart ausgestaltet, dass die Abarbeitung des Maschinencodes durch die Steuereinrichtung bewirkt, dass die Steuereinrichtung die Produktionsmaschine gemäß einem erfindungsgemäßen Betriebsverfahren betreibt.

Die Aufgabe wird weiterhin durch eine Steuereinrichtung mit den Merkmalen des Anspruchs 13 gelöst. Erfindungsgemäß wird eine Steuereinrichtung der eingangs genannten Art mit einem erfindungsgemäßen Steuerprogramm programmiert, so dass die Steuereinrichtung im Betrieb die Produktionsmaschine gemäß einem erfindungsgemäßen Betriebsverfahren betreibt.

Die Aufgabe wird weiterhin durch ein System, umfassend eine Produktionsmaschine sowie eine Steuereinrichtung, mit den Merkmalen des Anspruchs 14 gelöst. Erfindungsgemäß wird eine Produktionsmaschine der eingangs genannten Art von einer erfindungsgemäßen Steuereinrichtung gesteuert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Produktionsmaschine und zugehörige Komponenten,
- FIG 2: ein Ablaufdiagramm,
- FIG 3: eine zweidimensionale Verfahrbewegung,
- FIG 4: eine Reglerstruktur,
- FIG 5: eine weitere Reglerstruktur,
- FIG 6: ein Ablaufdiagramm,
- FIG 7: eine Reglerstruktur,
- FIG 8: ein Ablaufdiagramm,
- FIG 9: ein Ablaufdiagramm,
- FIG 10: einen Pufferspeicher,
- FIG 11: eine Anzeige einer Mensch-Maschine-Schnittstelle,
- FIG 12: ein Ablaufdiagramm und
- FIG 13: ein weiteres Ablaufdiagramm.

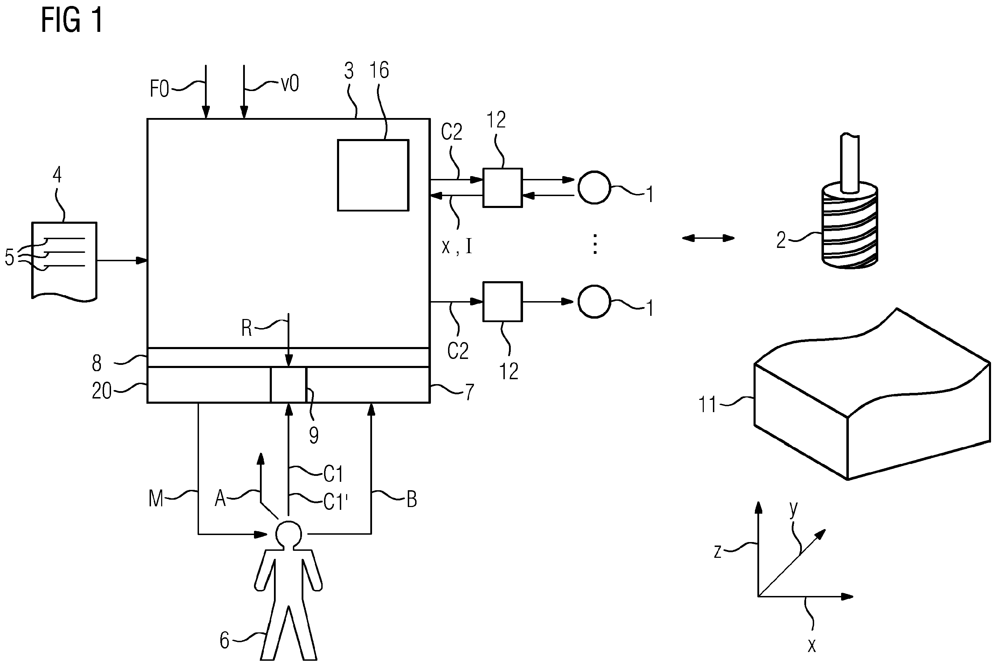

Gemäß FIG 1 weist eine Produktionsmaschine mindestens eine lagegeregelte Achse 1 auf. In der Regel sind sogar mehrere lagegeregelte Achsen 1 vorhanden. Mittels der lagegeregelten Achsen 1 wird mindestens ein Element 2 der Produktionsmaschine - beispielsweise im Falle einer Werkzeugmaschine ein Werkzeug - lagegeregelt verfahren.

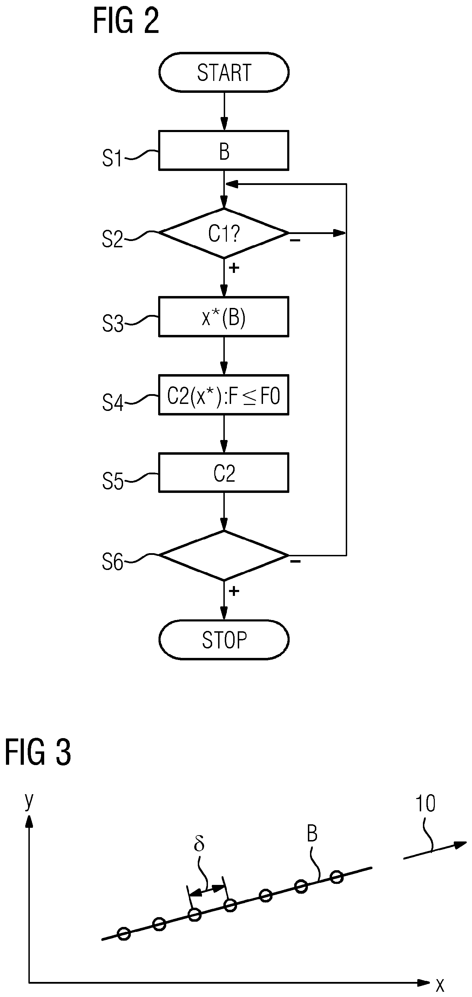

Die Produktionsmaschine wird von einer Steuereinrichtung 3 gesteuert. Die Steuereinrichtung 3 ist eine numerische Steuerung (CNC) oder eine ähnlich wirkende Bewegungssteuerung zur Ansteuerung der lagegeregelten Achsen 1. Die Steuereinrichtung 3 ist mit einem Steuerprogramm 4 programmiert. Das Steuerprogramm 4 umfasst Maschinencode 5, der von der Steuereinrichtung 3 abarbeitbar ist. Die Abarbeitung des Maschinencodes 5 durch die Steuereinrichtung 3 bewirkt, dass die Steuereinrichtung 3 die Produktionsmaschine gemäß einem Betriebsverfahren betreibt, das nachstehend - zunächst in Verbindung mit FIG 2 - näher erläutert wird.

Die Produktionsmaschine wird im Rahmen der vorliegenden Erfindung in einem manuellen Betrieb betrieben. Gemäß FIG 2 nimmt die Steuereinrichtung 3 im manuellen Betrieb in einem Schritt S1 von einem Bediener 6 der Produktionsmaschine eine momentane Bahn B entgegen. Entlang der momentanen Bahn B soll das mindestens eine Element 2 in einer Verfahrrichtung verfahren werden. Die Bahn B wird als momentane Bahn B bezeichnet, weil sie momentan vom Bediener 6 vorgegeben wird. In vielen Fällen kann die Bahn B weiterhin vom Bediener 6 prinzipiell jederzeit geändert werden. Lediglich bei der Abarbeitung eines Teileprogramms im Einzelsatzbetrieb ist die Bahn B als solche vorab fest vorgegeben. Auch in diesem Fall gibt der Bediener 6 durch Auswahl des jeweiligen einzelnen Satzes des Teileprogramms die Bahn B vor und gibt erst nach der Auswahl der jeweiligen Bahn B den Fahrbefehl C1 vor.

Die Vorgabe der momentanen Bahn B durch den Bediener 6 erfolgt über eine Eingabeeinrichtung 7 einer Mensch-Maschine-Schnittstelle 8 (HMI = human machine interface 8) der Steuereinrichtung 3. Die Eingabeeinrichtung 7 kann beispielsweise eine Tastatur oder ein Control Panel der Steuereinrichtung 3 sein.

Weiterhin nimmt die Steuereinrichtung 3 vom Bediener 6 in einem Schritt S2 einen Fahrbefehl C1 entgegen. Die Vorgabe des Fahrbefehls C1 kann beispielsweise über ein Betätigungselement 9 der Mensch-Maschine-Schnittstelle 8 erfolgen. Das Betätigungselement 9 kann insbesondere eine Taste oder ein Drehschalter sein.

Es ist möglich, dass der Bediener 6 die momentane Bahn B und den Fahrbefehl C1 getrennt voneinander vorgibt. Beispielsweise kann der Bediener 6 zunächst - beispielsweise mittels eines sogenannten G1-Befehls - eine anzufahrende Position des mindestens einen Elements 2 vorgeben und danach den Fahrbefehl C1 vorgeben. In diesem Fall wird das mindestens eine Element 2 ab der Vorgabe des Fahrbefehls C1 zu der anzufahrenden Position verfahren. Diese Betriebsweise ist Fachleuten unter dem Begriff MDA bekannt.

Es ist aber ebenso möglich, dass der Bediener 6 die momentane Bahn B und den Fahrbefehl C1 gemeinsam als untrennbare Einheit vorgibt. Beispielsweise kann der Bediener 6 eine einzelne Achse 1 auswählen und sodann einen Richtungstaster für die Vorwärtsrichtung oder einen Richtungstaster für die Rückwärtsrichtung der ausgewählten Achse 1 betätigen. Anstelle der Richtungstaster kann auch ein Drehrad vorhanden sein, dass der Bediener vorwärts oder rückwärts drehen kann. Im Falle der Vorgabe der momentanen Bahn B und des Fahrbefehls C1 gemeinsam als untrennbare Einheit wird das mindestens eine Element 2, ausgehend von der momentanen Position, immer weiter verfahren, bis der Bediener 6 den Fahrbefehl C1 nicht mehr vorgibt.

Es sind auch Mischformen möglich. Beispielsweise kann der Bediener 6 eine Richtung vorgeben, wobei zum Verfahren des mindestens einen Elements 2 in dieser Richtung mehrere Achsen 1 angesteuert werden müssen, das Verfahren des mindestens einen Elements 2 in der vorgegebenen Richtung aber nur erfolgt, solange der Bediener 6 den Fahrbefehl C1 - gegebenenfalls in der Unterscheidung vorwärts/rückwärts - vorgibt. In diesem Fall definiert der Bediener 6 direkt oder indirekt ein Verhältnis oder mehrere Verhältnisse, in dem bzw. in denen beim späteren Verfahren des mindestens einen Elements 2 mehrere Achsen 1 der Produktionsmaschine simultan angesteuert werden. Wenn - beispielsweise - je eine der Achsen 1 das mindestens eine Element 2 in x-, y- und z-Richtung eines kartesischen Koordinatensystems verfährt, kann der Bediener 6 beispielsweise eine Richtung vorgeben, die entsprechend der Darstellung in FIG 3 zwar hauptsächlich in x-Richtung verläuft, zusätzlich aber eine kleine y-Komponente aufweist. Die Verfahrrichtung ergibt sich in FIG 3 durch die Richtung des dort eingezeichneten Pfeils 10. Es sind selbstverständlich aber auch andere Bahnen B vorgebbar. Es ist sogar möglich, momentane Bahnen B vorzugeben, die nicht gerade verlaufen, beispielsweise eine Kreisbahn.

Im Rahmen der nachstehenden Erläuterungen wird stets nur auf die x-Komponente eingegangen. Die entsprechenden Ausführungen gelten aber prinzipiell auch für die y-Komponente und die z-Komponente und - falls vorhanden - auch weitere Komponenten, beispielsweise Orientierungen des mindestens einen Elements 2 im Raum.

Im Schritt S3 ermittelt die Steuereinrichtung 3 jeweils Lagesollwerte für die Achsen 1, beispielsweise x*. Die ermittelten Lagesollwerte x* - dargestellt in FIG 3 durch die einzelnen Punkte auf der Bahn B - schreiten entsprechend der Darstellung in FIG 3 schrittweise auf der momentanen Bahn B fort, wobei weiterhin ein maximal zulässiger Abstand δ unmittelbar aufeinanderfolgender Lagesollwerte x* eingehalten wird. Da die Lagesollwerte x* von der Steuereinrichtung 3 in aller Regel getaktet generiert werden (beispielsweise mit einem zeitlichen Abstand von 1 ms), korrespondiert die Abfolge der Lagesollwerte x* mit einer Sollgeschwindigkeit v*, nachfolgend auch als Geschwindigkeitssollwert v* bezeichnet. Die Sollgeschwindigkeit v* ergibt sich als Quotient des jeweiligen Abstands δ und des zeitlichen Abstands.

Die Formulierung, dass die Lagesollwerte x* mit einer Sollgeschwindigkeit v* entlang der momentanen Bahn B fortschreiten, soll bedeuten, dass sich die Lagesollwerte x* entsprechend der momentanen Bahn B ändern. Im Normalfall ist dies auch mit einer entsprechenden Bewegung des Elements 2 und damit einer Istgeschwindigkeit v verbunden. Im Normalfall ändern sich also auch die korrespondierenden Lageistwerte x entsprechend. Im Rahmen des Schrittes S3 ist aber nur gefordert, dass die Lagesollwerte x* sich entsprechend ändern. Es ist also nicht ausgeschlossen, dass das mindestens eine Element 2 der eigentlich gewünschten Bewegung - wie sie durch die Lagesollwerte x* definiert ist - nicht folgt, dass sich also die Lageistwerte x entweder gar nicht ändern oder zumindest den Lagesollwerten x* nur unzureichend folgen.

Die Steuereinrichtung 3 ermittelt die Lagesollwerte x* in der Regel derart, dass die Lagesollwerte x* einen konstanten Abstand voneinander aufweisen, so dass auch die Sollgeschwindigkeit v* konstant ist. In jedem Fall aber begrenzt die Steuereinrichtung 3 die Sollgeschwindigkeit v* auf einen Geschwindigkeitsgrenzwert v0. Der Geschwindigkeitsgrenzwert v0 ist der Steuereinrichtung 3 vorgegeben. Er kann beispielsweise durch das Steuerprogramm 4 festgelegt sein. Es ist aber auch möglich, dass der Geschwindigkeitsgrenzwert v0 der Steuereinrichtung 3 vom Bediener 6 oder anderweitig vorgegeben wird. Die Begrenzung der Sollgeschwindigkeit v* ist eine zusätzliche Sicherheitsmaßnahme.

Unabhängig von der Art und Weise, auf welche der Steuereinrichtung 3 der Geschwindigkeitsgrenzwert v0 vorgegeben wird, ist der Geschwindigkeitsgrenzwert v0 relativ niedrig gewählt. Dadurch ist gewährleistet, dass in dem Fall, dass das mindestens eine Element 2 aufgrund der Verfahrbewegung an einem Hindernis 11 - beispielsweise einem bearbeiteten Werkstück oder einem anderen Element der Produktionsmaschine - anstößt, an dem mindestens einen Element 2 und/oder dem Hindernis 11 keine oder zumindest nur relativ geringe Schäden auftreten. Der hierfür konkret erforderliche Geschwindigkeitsgrenzwert v0 ergibt sich aus der Trägheit der beteiligten Achsen 1 in Verbindung mit der Steifigkeit der Elemente 2 der Produktionsmaschine.

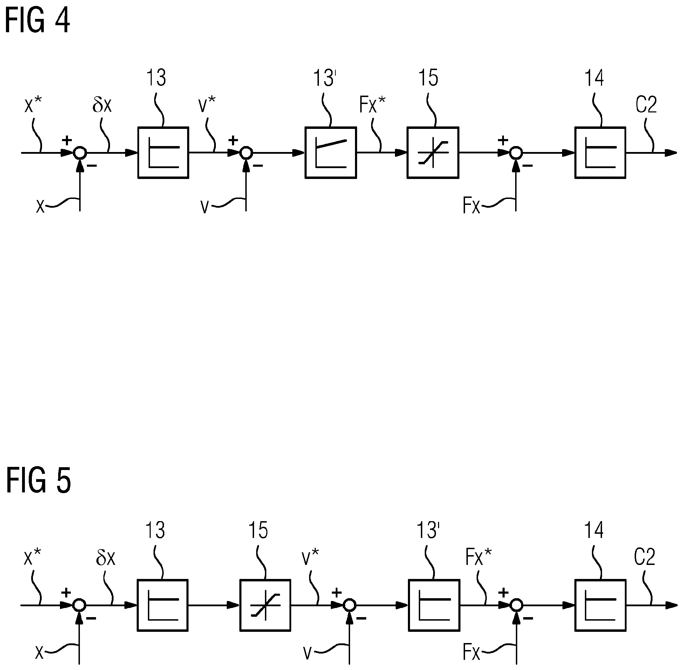

In einem nachfolgenden Schritt S4 ermittelt die Steuereinrichtung 3 anhand der Lagesollwerte x* und korrespondierender Lageistwerte x Steuerbefehle C2 für Antriebe 12, welche die Achsen 1 antreiben. Die Ermittlung des Schrittes S4 erfolgt derart, dass eine Kontaktkraft F auf einen Kraftgrenzwert F0 begrenzt wird. Die Kontaktkraft F ist diejenige Kraft, mit der das mindestens eine Element 2 auf seine Umgebung einwirkt. Die Umgebung ist hierbei nicht die umgebende Luft oder dergleichen, sondern sind andere Elemente 2 der Produktionsmaschine oder andere feststehende Hindernisse 11 und dergleichen. Die Begrenzung der Kontaktkraft F kann nach Bedarf als Betrag, komponentenweise für die einzelnen Achsen 1 und/oder komponentenweise für zueinander orthogonale Richtungen erfolgen. Die Ermittlung der Steuerbefehle C2 kann beispielsweise entsprechend der Darstellung in FIG 4 unter Verwendung von Lagereglern 13 erfolgen. Die Lageregler 13 sind, sofern sie vorhanden sind, den einzelnen Antrieben 12 zugeordnet.

Die Vorgehensweise gemäß Figur 4 deckt zunächst den Fall ab, dass das mindestens eine Element 2 in einer bestimmten Richtung verfahren wird und hierbei orthogonal auf ein Hindernis 11 trifft. Die Vorgehensweise gemäß Figur 4 deckt aber auch den Fall ab, dass das mindestens eine Element 2 in einer bestimmten Richtung verfahren wird und hierbei unter einem von 90° verschiedenen Winkel - insbesondere einem kleinen Winkel - auf ein Hindernis 11 trifft. Denn durch das Auftreffen auf das Hindernis 11 entsteht eine Kontaktkraft F, die nicht nur eine Komponente in der Richtung aufweist, in der das mindestens eine Element 2 verfahren wird, sondern auch eine Komponente orthogonal dazu. Die orthogonale Komponente kann ohne weiteres ermittelt werden, beispielsweise aufgrund einer Erfassung des zum Halten einer Position erforderlichen Stromes. Durch eine Betrachtung der einzelnen Komponenten der Kontaktkraft F im Raum oder des Betrages der Kontaktkraft F oder der Komponenten für alle Achsen 1 kann daher auch ein derartiger Fall ohne weiteres erfasst und mit abgedeckt werden.

Der Kraftgrenzwert F0 ist der Steuereinrichtung 3 vorgegeben. Er kann beispielsweise durch das Steuerprogramm 4 festgelegt sein. Es ist aber auch möglich, dass der Kraftgrenzwert F0 der Steuereinrichtung 3 vom Bediener 6 oder anderweitig vorgegeben wird. Unabhängig von der Art und Weise, auf welche der Steuereinrichtung 3 der Kraftgrenzwert F0 vorgegeben wird, ist der Kraftgrenzwert F0 derart niedrig gewählt, dass auch Schäden an dem verfahrenen Element 2 und/oder an dem Hindernis 11 entstehen, wenn das Element 2 aufgrund der Verfahrbewegung an dem Hindernis 11 anstößt, möglichst gering bleiben.

In einem Schritt S5 gibt die Steuereinrichtung 3 die ermittelten Steuerbefehle C2 an die Antriebe 12 aus und steuert die Antriebe 12 dadurch entsprechend an. Im Ergebnis ermittelt die Steuereinrichtung 3 somit zwar die Steuerbefehle C2 für die Antriebe 12 und steuert die Antriebe 12 entsprechend an. Die dadurch bewirkte Kontaktkraft F wird jedoch aufgrund der entsprechenden Ermittlung im Schritt S4 auf den vorgegebenen Kraftgrenzwert F0 begrenzt.

In einem Schritt S6 prüft die Steuereinrichtung 3, ob die Vorgehensweise von FIG 2 beendet werden soll. Wenn und solange dies nicht der Fall ist, geht die Steuereinrichtung 3 zum Schritt S2 oder S3 zurück. Soweit erforderlich, wird erneut geprüft, ob der Bediener 6 weiterhin den Fahrbefehl C1 vorgibt. Der Schritt S6 als solcher ist nicht Gegenstand der vorliegenden Erfindung.

Um zu gewährleisten, dass die im Schritt S4 ermittelten und im Schritt S5 an die Antriebe 12 ausgegebenen Steuerbefehle C2 tatsächlich bewirken, dass die Kontaktkraft F auf den Kraftgrenzwert F0 begrenzt wird, sind verschiedene Vorgehensweisen möglich. Beispielsweise ist es entsprechend der Darstellung in FIG 4 möglich, dass die Steuereinrichtung 3 Geschwindigkeitsregler 13' und Kraftregler 14 umfasst. Die Geschwindigkeitsregler 13' sind den Lagereglern 13 unterlagert, die Kraftregler 14 wiederum den Geschwindigkeitsreglern 13'. Die Kraftregler 14 sind den Antrieben 12 vorgeordnet.

Die Geschwindigkeitsregler 13' können "echte" Geschwindigkeitsregler sein. Alternativ kann es sich auch hierzu gleichwertige Regler wie beispielsweise Drehzahlregler oder dergleichen handeln. In analoger Weise können die Kraftregler 14 "echte" Kraftregler sein. Alternativ kann es sich auch um hierzu gleichwertige Regler wie beispielsweise Momentregler oder Stromregler handeln.

Die Steuereinrichtung 3 ermittelt mittels der Lageregler 13 anhand der Lagesollwerte x* und der korrespondierenden Lageistwerte x Geschwindigkeitssollwerte v* für die unterlagerten Geschwindigkeitsregler 13'. Weiterhin ermittelt die Steuereinrichtung 3 mittels der Geschwindigkeitsregler 13' anhand der Geschwindigkeitssollwerte x* und korrespondierender Geschwindigkeitsistwerte v Kraftsollwerte Fx* für die Kraftregler 14. Die Kraftsollwerte Fx* wiederum begrenzt die Steuereinrichtung 3 auf den vorgegebenen Kraftgrenzwert F0 oder einen daraus abgeleiteten Wert.

Zum Begrenzen der Kraftsollwerte Fx* können zwischen den Lagereglern 13 und den Kraftreglern 14 Begrenzer 15 angeordnet sein, welche die Kraftsollwerte Fx* auf den vorgegebenen Kraftgrenzwert F0 oder - beispielsweise bei einer Aufteilung des Kraftgrenzwerts F0 auf mehrere Achsen 1 - einen daraus abgeleiteten Wert begrenzen. Falls die Geschwindigkeitsregler 13' entsprechend der Darstellung in FIG 4 als PI-Regler ausgebildet sind, müssen die Begrenzer 15 den Geschwindigkeitsreglern 13' nachgeordnet sein, also zwischen den Geschwindigkeitsreglern 13' und den Kraftregler 14 angeordnet sein. Auch wenn die Geschwindigkeitsregler 13' entsprechend der Darstellung in FIG 5 als reine P-Regler ausgebildet sind, können die Begrenzer 15 den Geschwindigkeitsreglern 13' nachgeordnet sein, also zwischen den Geschwindigkeitsreglern 13' und den Kraftreglern 14 angeordnet sein. In diesem Fall ist es alternativ aber ebenso möglich, dass die Begrenzer 15 den Geschwindigkeitsreglern 13' vorgeordnet sind, also zwischen den Lagereglern 13 und den Geschwindigkeitsreglern 13' angeordnet sind oder sogar den Lagereglern 13 vorgeordnet sind.

Die Steuereinrichtung 3 ermittelt im Falle der Ausgestaltung gemäß den FIG 4 und 5 die Steuerbefehle C2 für die Antriebe 12 mittels der Kraftregler 14. Da den Kraftreglern 14 die entsprechend begrenzten Kraftsollwerte (und auch die zugehörigen Kraftistwerte Fx) zugeführt werden, werden auch die Steuerbefehle C2 entsprechend ermittelt.

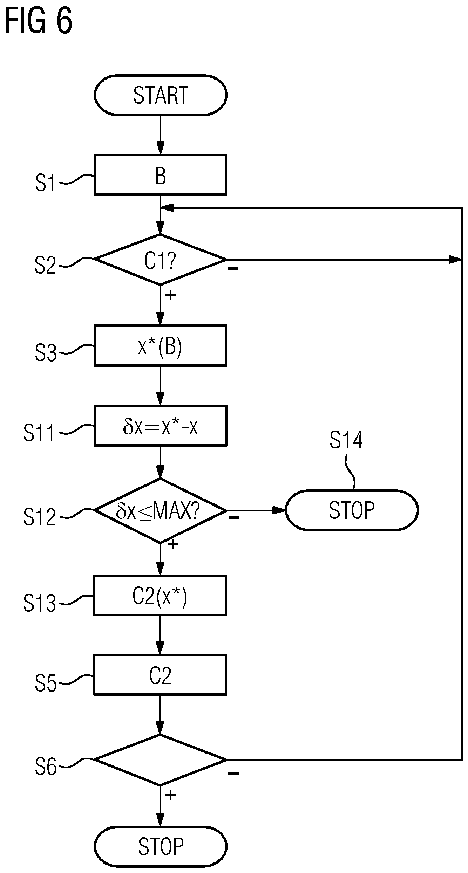

Vor allem aber ist eine Vorgehensweise möglich, die nachstehend in Verbindung mit FIG 6 erläutert wird. Diese Vorgehensweise kann nach Bedarf mit der Ausgestaltung gemäß FIG 4 und/oder der Ausgestaltung gemäß FIG 5 kombiniert werden.

Auch bei der Ausgestaltung von FIG 6 umfasst die Steuereinrichtung 3 Lageregler 13 für die Achsen 1 (üblicherweise mit unterlagerten Drehzahlreglern 13') und Kraftregler 14. Den Lagereglern 13 werden, wie üblich, von der Steuereinrichtung 3 die Lagesollwerte x* und die Lageistwerte x zugeführt. Der Lageregler 13 ist vorzugsweise als reiner P-Regler ausgebildet. Falls vorhanden, ist vorzugsweise auch der Geschwindigkeitsregler 13' als reiner P-Regler ausgebildet. Wenn Lageregler 13 mit unterlagerten Kraftregler an 14 vorhanden sind, ist der Schritt S4 entsprechend der Darstellung in FIG 6 durch Schritte S11 bis S14 ersetzt.

Im Schritt S11 ermittelt die Steuereinrichtung 3 einen Schleppfehler δx der Antriebe 12. Der Begriff "Schleppfehler" hat für den Fachmann eine eindeutige Bedeutung. Es handelt sich um die Differenz von Lagesollwert x* und Lageistwert x, gegebenenfalls auch den Betrag dieser Differenz. Der Schleppfehler δx entspricht also der Regelabweichung des zugehörigen Lagereglers 13. Im Schritt S12 überwacht die Steuereinrichtung 3 den Schleppfehler δx auf Einhalten eines vorbestimmten Maximalwerts MAX. Wenn und solange der Schleppfehler δx unterhalb des Maximalwerts MAX bleibt, ermittelt die Steuereinrichtung 3 im Schritt S13 - entweder ebenso wie im Schritt S4 mit oder alternativ ohne Begrenzung etwaiger Kraftsollwerte Fx* - die Steuerbefehle C2 für die Antriebe 12 und gibt die Steuerbefehle C2 im Schritt S5 an die Antriebe 12 aus. Sobald der Schleppfehler δx jedoch den Maximalwert MAX überschreitet, geht die Steuereinrichtung 3 zum Schritt S14 über. Im Schritt S14 unterdrückt die Steuereinrichtung 3 ein weiteres Verfahren des Elements 2. Der guten Ordnung halber sei erwähnt, dass in dem singulären Fall, dass der Schleppfehler δx exakt gleich dem Maximalwert MAX ist, nach Bedarf weiterhin die Steuerbefehle C2 ermittelt und an die Antriebe 12 ausgegeben werden können oder das weitere Verfahren des Elements 2 unterdrückt werden kann.

Die Vorgehensweise von FIG 6 ist insbesondere dann von Vorteil, wenn der Lageregler 13 und der Drehzahlregler 13' entsprechend der Darstellung in FIG 5 als Proportionalregler ausgebildet sind, das Ausgangssignal des Lagereglers 13 also proportional zum Schleppfehler δx ist und der Drehzahlregler 13' keinen Integralanteil aufweist. Der Quotient zwischen dem Ausgangssignal des Lagereglers 13 und dem Schleppfehler δx, also die Proportionalverstärkung des Lagereglers 13, ist in diesem Fall proportional zum Kraftsollwert Fx*. Es ist daher möglich, den Schleppfehler δx derart zu bestimmen, dass der Kraftsollwert Fx* unter dem vorgegebenen Kraftgrenzwert F0 bleibt.

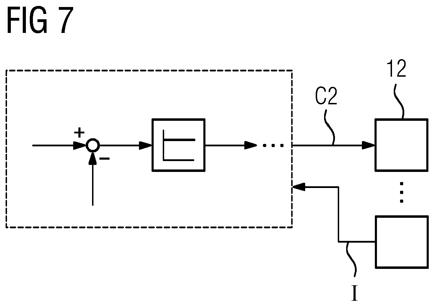

Ebenso ist es möglich, dass die Steuereinrichtung 3 entsprechend der Darstellung in FIG 7 einen Messwert I für eine Verfahrkraft F' entgegennimmt, mit der die Antriebe 12 auf das Element 2 einwirken. Beispielsweise kann die Steuereinrichtung 3 von den Antrieben 12 einen jeweiligen Strommesswert entgegennehmen, der im Wesentlichen mit dem von dem jeweiligen Antrieb 12 generierten Moment und damit mit der von dem jeweiligen Antrieb 12 aufgebrachten Kraft korrespondiert.

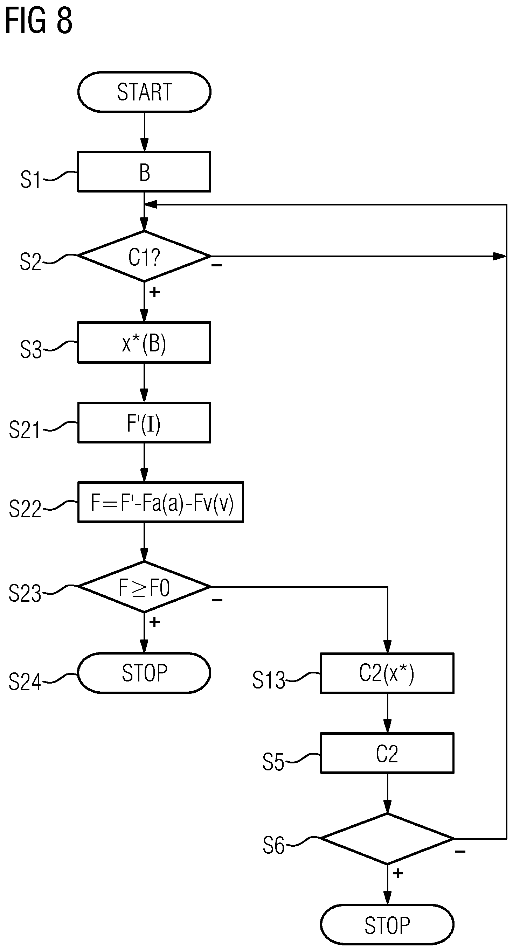

In diesem Fall ist es möglich, dass die Steuereinrichtung 3 entsprechend der Darstellung in FIG 8 in einem Schritt S21 den entsprechenden Messwert I entgegennimmt und daraus die Verfahrkraft F' ermittelt. Sodann ermittelt die Steuereinrichtung 3 in einem Schritt S22 die zugehörige Kontaktkraft F. Im einfachsten Fall wird im Schritt S22 schlichtweg die ermittelte Verfahrkraft F' als Kontaktkraft F übernommen. Vorzugsweise ermittelt die Steuereinrichtung 3 im Schritt S22 jedoch die Verfahrgeschwindigkeit v und aufbauend auf der Verfahrgeschwindigkeit v einen geschwindigkeitsabhängigen Kraftanteil Fv. Der geschwindigkeitsabhängige Kraftanteil Fv korrespondiert im Wesentlichen mit der Reibungskraft, die zum Verfahren des Elements 2 aufgebracht werden muss. Alternativ oder zusätzlich kann die Steuereinrichtung 3 im Schritt S22 eine Beschleunigung a des Elements 2 und aufbauend auf der Beschleunigung a einen beschleunigungsabhängigen Kraftanteil Fa ermitteln. Der beschleunigungsabhängige Kraftanteil Fa entspricht der Kraft, die zum Beschleunigen des Elements 2 aufgebracht werden muss. Die Ermittlung derartiger Kraftanteil Fa, Fv ist Fachleuten bekannt. Rein beispielhaft kann auf die Vorgehensweise gemäß IMD (Integrated Monitoring und Diagnosis) der Sinumerik verwiesen werden.

Je nachdem, welche dieser beiden Ermittlungen erfolgen, berücksichtigt die Steuereinrichtung 3 im Schritt S22 den geschwindigkeitsabhängigen Kraftanteil Fv und/oder den beschleunigungsabhängigen Kraftanteil Fa bei der Ermittlung der Kontaktkraft F. Insbesondere kann die Steuereinrichtung 3 im Schritt S22 die Kontaktkraft F dadurch ermitteln, dass sie den geschwindigkeitsabhängigen Kraftanteil Fv und/oder den beschleunigungsabhängigen Kraftanteil Fa von der im Schritt S21 ermittelten Verfahrkraft F' subtrahiert.

Unabhängig davon, wie der Schritt S22 konkret ausgestaltet ist, überwacht die Steuereinrichtung 3 die Kontaktkraft F in einem Schritt S23 auf Einhalten des vorgegebenen Kraftgrenzwerts F0. Wenn und solange die Kontaktkraft F den vorgegebenen Kraftgrenzwert F0 nicht übersteigt, ermittelt die Steuereinrichtung 3 - mit oder ohne Begrenzung etwaiger Kraftsollwerte Fx* - weiterhin die Steuerbefehle C2 für die Antriebe 12 und gibt die Steuerbefehle C2 an die Antriebe 12 aus. Sobald die Kontaktkraft F den vorgegebenen Kraftgrenzwert F0 jedoch übersteigt, geht die Steuereinrichtung 3 zu einem Schritt S24 über. Im Schritt S24 unterdrückt die Steuereinrichtung 3 ein weiteres Verfahren des Elements 2. Der guten Ordnung halber sei erwähnt, dass in dem singulären Fall, dass die Kontaktkraft F exakt gleich dem vorgegebenen Kraftgrenzwert F0 ist, nach Bedarf weiterhin die Steuerbefehle C2 ermittelt und an die Antriebe 12 ausgegeben werden können oder das weitere Verfahren des Elements 2 unterdrückt werden kann.

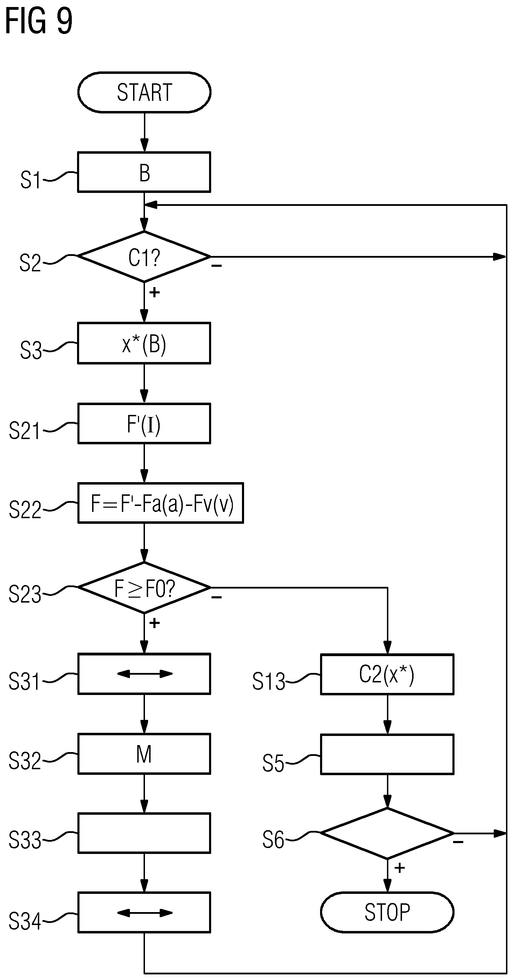

Noch besser als ein reines Stoppen ist eine sofortige Reduzierung der Kontaktkraft F. Dies wird nachfolgend in Verbindung mit FIG 9 näher erläutert.

Im Rahmen der Vorgehensweise gemäß FIG 9 überwacht die Steuereinrichtung 3 - analog zur Vorgehensweise von FIG 8 - die Verfahrkraft F auf Einhalten des Kraftgrenzwerts F0. Der Schritt S24 ist jedoch durch einen Schritt S31 ersetzt, der gegebenenfalls durch einen Schritt S32 ergänzt werden kann. Im Schritt S31 kehrt die Steuereinrichtung 3 die Verfahrrichtung um. Die Steuereinrichtung 3 verfährt also das Element 2 in die entgegengesetzte Richtung, aus der das Element 2 zuvor gekommen ist. Im Schritt S32 kann eine entsprechende Meldung M an den Bediener 6 ausgegeben werden. Beispielsweise kann eine entsprechende Nachricht auf einem Display der Mensch-Maschine-Schnittstelle 8 aufleuchten oder blinken.

Zur Implementierung des Schrittes S31 ist es möglich, dass die Steuereinrichtung 3 die Verfahrrichtung als solche umkehrt. Alternativ oder zusätzlich ist es möglich, dass die Steuereinrichtung 3 die Richtung der Sollgeschwindigkeit v* und/oder eine Richtung der Sollkraft Fx* umkehrt. Insbesondere die Umkehr der Richtung der Sollkraft Fx* führt oftmals schneller zu einer tatsächlichen Richtungsumkehr der Verfahrbewegung als eine reine Umkehr der Verfahrrichtung.

Es ist möglich, dass die Steuereinrichtung 3 vom Schritt S31 bzw. vom Schritt S32 aus direkt zum Schritt S2 oder zum Schritt S3 zurückgeht. Es ist aber auch möglich, dem Schritt S31 bzw. dem Schritt S32 entsprechend der Darstellung in FIG 9 Schritte S33 und S34 nachzuordnen. In diesem Fall leitet die Steuereinrichtung 3 im Schritt S33 das Zurückfahren automatisch in die Wege. Das Zurückfahren kann beispielsweise für eine bestimmte Strecke erfolgen oder so lange erfolgen, bis die Kontaktkraft F hinreichend klein geworden ist. Im Schritt S34 erfolgt in diesem Fall eine erneute Richtungsumkehr, so dass wieder in der ursprünglichen Verfahrrichtung verfahren wird.

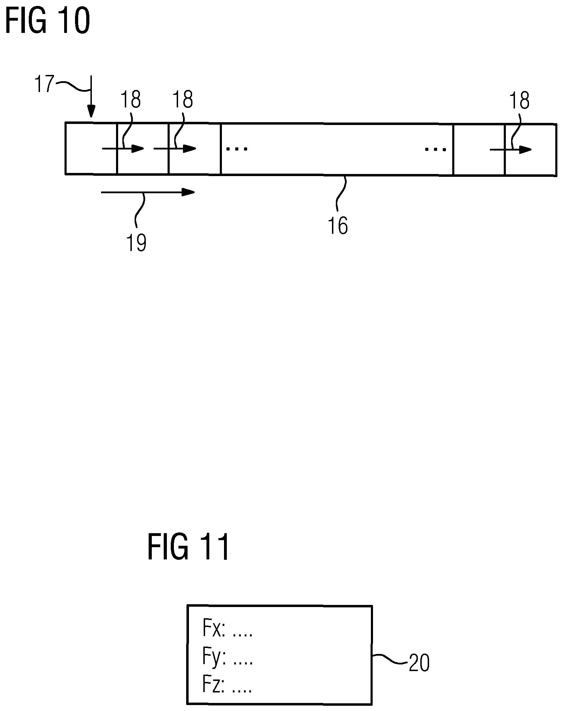

Insbesondere um das automatische Zurückfahren in einfacher und effizienter Weise zu ermöglichen, kann die Speichereinrichtung 3 - siehe FIG 1 - einen Pufferspeicher 16 aufweisen. Beim Verfahren des Elements 2 in der Verfahrrichtung speichert die Steuereinrichtung 3 die Abfolge von Lagesollwerten x* und/oder die zugehörigen Lageistwerte x temporär in dem Pufferspeicher 16 ab. Das Abspeichern kann beispielsweise derart erfolgen, dass der aktuelle Lagesollwert x* und/oder der aktuelle Lageistwert x, wie in FIG 10 durch einen Pfeil 17 angedeutet ist, stets in denselben Speicherplatz des Pufferspeicher 16 eingespeichert wird. Die bereits im Pufferspeicher 16 gespeicherten Lagesollwerte x* und/oder Lageistwerte x werden, wie in FIG 10 durch Pfeile 18 angedeutet ist, nach Art eines Schieberegisters immer um einen Speicherplatz weiter geschoben. Wenn der Pufferspeicher 16 voll ist, wird jeweils der älteste gespeicherte Wert gelöscht. In dem Pufferspeicher 16 ist dadurch für begrenzte Zeit die bisherige Bewegungsfolge gespeichert. Die zeitliche Grenze ist durch die Größe des Pufferspeichers 16 bestimmt.

Wenn die Verfahrrichtung umgekehrt wird, das Element 2 also zurückgefahren werden soll, werden die im Pufferspeicher 16 gespeicherten Werte von der Steuereinrichtung 3 in einer Reihenfolge verwertet, die gegenüber dem Speichern invertiert ist. Es wird also - so wie bei einem last-in-first-out-Speicher (ein typisches Beispiel hierfür ist ein Stack) - der zuletzt eingespeicherte Wert zuerst ausgelesen, dann der unmittelbar vorher eingespeicherte Wert usw. Dies ist in FIG 10 durch einen Pfeil 19 angedeutet. Die ausgelesenen Werte werden beim Zurückfahren als neue Lagesollwerte verwertet. Durch diese Vorgehensweise wird das Element 2 also in die umgekehrte Richtung verfahren. Die Vorgehensweise ist unabhängig davon realisierbar, ob das Verfahren entgegen der Verfahrrichtung automatisiert oder aufgrund eines Fahrbefehl C1, C1' des Bedieners 6 erfolgt. In beiden Fällen kann das Zurückfahren auf exakt demselben Weg erfolgen kann, auf dem der Bediener 6 das Element 2 zuvor vorwärts verfahren hat.

Die vorliegende Erfindung kann weiterhin auch auf weitere Arten ausgestaltet werden.

So ist es beispielsweise entsprechend der Darstellung in FIG 11 möglich, dass die Steuereinrichtung 3 dem Bediener über eine Anzeigeeinrichtung 20 der Mensch-Maschine-Schnittstelle 8 eine optische Rückkopplung über die Kontaktkraft F liefert. Vorzugsweise wird hierbei nicht nur der Betrag der Kontaktkraft F angezeigt, sondern auch deren Aufschlüsselung in ihre einzelnen Komponenten Fx, Fy, Fz, gegebenenfalls einschließlich Vorzeichen. Die Aufschlüsselung der Kontaktkraft F in die einzelnen Komponenten kann nach Bedarf für die einzelnen Achsen 1 oder für zueinander orthogonale Richtungen vorgenommen werden. Gegebenenfalls können auch beide Aufschlüsselungen vorgenommen werden.

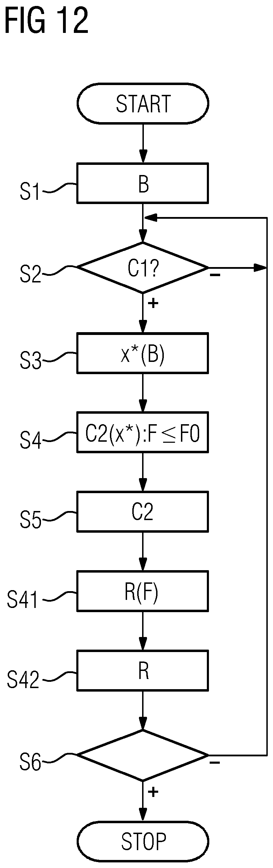

Weiterhin ist es möglich, dass die Steuereinrichtung entsprechend der Darstellung in FIG 12 in einem Schritt S41 anhand der zuvor ermittelten Kontaktkraft F eine haptisch erfassbare Rückmeldung R für das Betätigungselement 9 ermittelt und in einem Schritt S42 das Betätigungselement 9 mit der haptisch erfassbaren Rückmeldung R beaufschlagt. Die Rückmeldung R des Betätigungselements 9 ist somit von der Kontaktkraft F abhängig. Beispielsweise kann die Rückmeldung R derart sein, dass der Bediener 6 das Betätigungselement 9 umso stärker betätigen muss, je größer die Kontaktkraft F ist. Auch ist es möglich, dass die Steuereinrichtung 3 eine Frequenz einer Schwingung, mit der sie das Betätigungselement 9 ansteuert, in Abhängigkeit von der Kontaktkraft F einstellt. Vorzugsweise ist in diesem Fall die Frequenz umso größer, je größer die Kontaktkraft F ist.

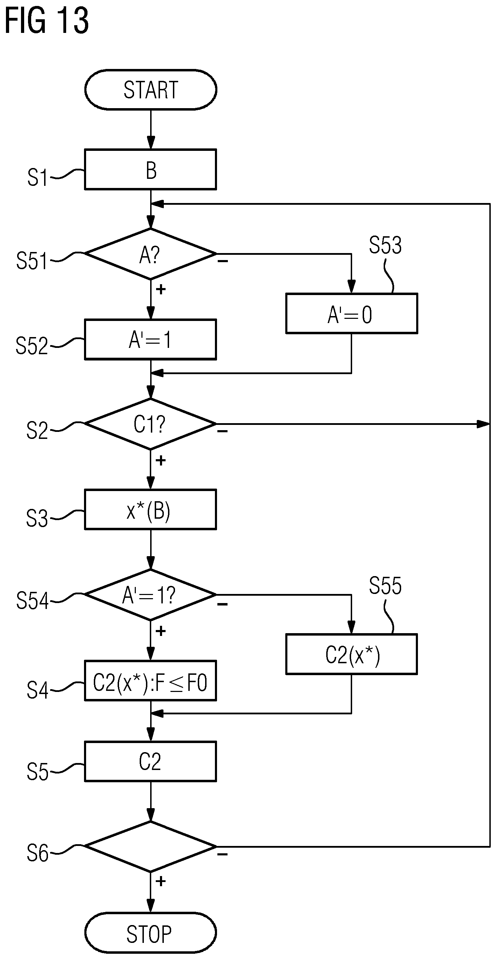

Weiterhin ist es möglich, die Vorgehensweise von FIG 2 - dies gilt in analoger Weise auch für die anderen Vorgehensweisen - entsprechend FIG 13 auszugestalten.

In der Ausgestaltung gemäß FIG 13 ist dem Schritt S2 ein Schritt S51 vorgeordnet. Im Schritt S51 prüft die Steuereinrichtung 3, ob ihr der Bediener 6 einen Aktivierungsbefehl A vorgibt. Sofern der Bediener 6 den Aktivierungsbefehl A vorgibt, setzt die Steuereinrichtung 3 in einem Schritt S52 ein Flag A' auf den Wert 1. Anderenfalls setzt die Steuereinrichtung 3 das Flag A' in einem Schritt S53 auf den Wert 0. Das Vorgeben des Aktivierungsbefehls A kann beispielsweise durch Betätigen einer zusätzlichen Taste erfolgen. Auch andere Vorgehensweisen sind möglich.

In einem Schritt S54 prüft die Steuereinrichtung 3, ob das Flag A' den Wert 1 aufweist. Wenn dies der Fall ist, führt die Steuereinrichtung 3 den Schritt S4 aus. Dadurch werden - zumindest im Ergebnis - die Steuerbefehle C2 für die Antriebe 12 derart ermittelt, dass die Kontaktkraft F den Kraftgrenzwert F0 einhält. Wenn das Flag A' hingegen den Wert 0 aufweist, führt die Steuereinrichtung einen Schritt S55 aus. Im Schritt S55 ermittelt die Steuereinrichtung 3 - analog zum Schritt S13 - die Steuerbefehle C2 für die Antriebe 12. Im Gegensatz zum Schritt S4 und in Übereinstimmung mit dem Schritt S13 ist die Ermittlung der Steuerbefehle C2 hingegen nicht derart beschränkt, dass die Kontaktkraft F auf den Kraftgrenzwert F0 begrenzt wird.

Durch die Vorgehensweise von FIG 13 kann somit erreicht werden, dass der Bediener 6 je nach Lage des Einzelfalls jederzeit entscheiden kann, ob er das erfindungsgemäße Verfahren aktiviert oder nicht.

Zusammengefasst betrifft die vorliegende Erfindung somit folgenden Sachverhalt:
Eine Steuereinrichtung 3 einer Produktionsmaschine nimmt von einem Bediener 6 in einem manuellen Betrieb der Produktionsmaschine über eine Eingabeeinrichtung 7 eine momentane Bahn B und einen Fahrbefehl C1 entgegen. Entlang der momentanen Bahn B soll mittels lagegeregelter Achsen 1 mindestens ein Element 2 der Produktionsmaschine in einer Verfahrrichtung verfahren werden. Die Steuereinrichtung 3 ermittelt aufgrund des Fahrbefehls C1 eine Abfolge von Lagesollwerten x* für die Achsen 1. Die Lagesollwerte x* schreiten mit einer Sollgeschwindigkeit v* in der Verfahrrichtung entlang der momentanen Bahn B fort. Die Steuereinrichtung 3 ermittelt anhand der Lagesollwerte x* und korrespondierender Lageistwerte x Steuerbefehle C2 für die Achsen 1 antreibende Antriebe 12 und steuert die Antriebe 12 entsprechend an. Die Steuereinrichtung 3 ermittelt die Steuerbefehle C2 derart, dass eine Kontaktkraft F, mit der das mindestens eine Element 2 auf seine Umgebung einwirkt, auf einen der Steuereinrichtung 3 vorgegebenen Kraftgrenzwert F0 begrenzt wird. Die Steuereinrichtung 3 überwacht einen Schleppfehler δx der Antriebe 12 auf Einhalten eines vorbestimmten Maximalwerts MAX überwacht und unterdrückt bei Erreichen des Maximalwerts MAX ein weiteres Verfahren des mindestens einen Elements 2 der Produktionsmaschine.

Die vorliegende Erfindung weist viele Vorteile auf. Insbesondere führt sie in jedem Fall zu einem Verhalten der Produktionsmaschine, bei dem Elemente 2 der Produktionsmaschine nicht oder zumindest nur in geringem Umfang geschädigt werden. Dies gilt auch dann noch, wenn sich durch einen anderen Unfall die Geometrie der Produktionsmaschine oder des Werkstücks bereits verändert hat.

## Patentansprüche

1. Betriebsverfahren für eine Steuereinrichtung (3) für eine Produktionsmaschine,
- wobei die Steuereinrichtung (3) von einem Bediener (6) der Produktionsmaschine in einem manuellen Betrieb der Produktionsmaschine über eine Eingabeeinrichtung (7) einer Mensch-Maschine-Schnittstelle (8) eine momentane Bahn (B) und einen Fahrbefehl (C1) entgegennimmt,
- wobei mindestens ein Element (2) der Produktionsmaschine mittels lagegeregelter Achsen (1) entlang der momentanen Bahn (B) in einer Verfahrrichtung verfahren werden soll,
- wobei die Steuereinrichtung (3) aufgrund des Fahrbefehls (C1) eine Abfolge von Lagesollwerten (x*) für die Achsen (1) ermittelt,
- wobei die Lagesollwerte (x*) mit einer Sollgeschwindigkeit (v*) in der Verfahrrichtung entlang der momentanen Bahn (B) fortschreiten,
- wobei die Steuereinrichtung (3) anhand der Lagesollwerte (x*) und korrespondierender Lageistwerte (x) Steuerbefehle (C2) für die Achsen (1) antreibende Antriebe (12) ermittelt und die Antriebe (12) entsprechend ansteuert,
- wobei die Steuereinrichtung (3) die Steuerbefehle (C2) derart ermittelt, dass eine Kontaktkraft (F), mit der das mindestens eine Element (2) auf seine Umgebung einwirkt, auf einen der Steuereinrichtung (3) vorgegebenen Kraftgrenzwert (F0) begrenzt wird,
**dadurch gekennzeichnet ,**
**dass** die Steuereinrichtung (3) einen Schleppfehler (δx) der Antriebe (12) auf Einhalten eines vorbestimmten Maximalwerts (MAX) überwacht und bei Erreichen des Maximalwerts (MAX) ein weiteres Verfahren des mindestens einen Elements (2) der Produktionsmaschine unterdrückt,
wobei die Steuereinrichtung (3) die Steuerbefehle (C2) für die Antriebe (12) dadurch ermittelt, dass sie
- mittels den Antrieben (12) zugeordneten Lagereglern (13) anhand der Lagesollwerte (x*) und der korrespondierenden Lageistwerte (x) Geschwindigkeitssollwerte (v*) für die den Lagereglern (13) unterlagerte Geschwindigkeitsregler (13') ermittelt,
- anhand der Geschwindigkeitssollwerte (x*) und korrespondierender Geschwindigkeitsistwerte (v) Kraftsollwerte (Fx*) für den Geschwindigkeitsreglern (13') unterlagerte sowie den Antrieben (12) vorgeordnete Kraftregler (14) ermittelt,
- die Kraftsollwerte (Fx*) auf den vorgegebenen Kraftgrenzwert (F0) oder einen daraus abgeleiteten Wert begrenzt und
- die Steuerbefehle (C2) für die Antriebe (12) mittels der Kraftregler (14) ermittelt.

2. Betriebsverfahren nach Anspruch 1,
**dadurch gekennzeichnet ,**
**dass** die Kontaktkraft (F) als Betrag, komponentenweise für die einzelnen Achsen (1) und/oder komponentenweise für zueinander orthogonale Richtungen begrenzt wird.

3. Betriebsverfahren nach Anspruch 1 oder 2,
**dadurch gekennzeichnet ,**
**dass** die Steuereinrichtung (3) den Antrieben (12) zugeordnete Lageregler (13) und den Lagereglern (13) direkt oder indirekt unterlagerte Kraftregler (14) umfasst und die Lageregler (13) als P-Regler ausgebildet sind.

4. Betriebsverfahren nach einem der obigen Ansprüche,
**dadurch gekennzeichnet ,**
- **dass** die Steuereinrichtung (3) einen Messwert (I) für eine Verfahrkraft (F') entgegennimmt, mit der die Antriebe (12) auf das mindestens eine Element (2) einwirken,
- **dass** die Steuereinrichtung (3) anhand des entgegengenommenen Messwertes (I) die Kontaktkraft (F) ermittelt und
- **dass** die Steuereinrichtung (3) ein weiteres Verfahren des mindestens einen Elements (2) in der Verfahrrichtung unterdrückt, wenn und sobald die ermittelte Kontaktkraft (F) den vorgegebenen Kraftgrenzwert (F0) erreicht.

5. Betriebsverfahren nach Anspruch 4,
**dadurch gekennzeichnet ,**
**dass** die Steuereinrichtung (3) anhand der Lageistwerte (x) der Achsen (1) eine Beschleunigung (a) und/oder die Verfahrgeschwindigkeit (v) des mindestens einen Elements (2) ermittelt und dass die Steuereinrichtung (3) bei der Ermittlung der Kontaktkraft (F) einen durch die Beschleunigung (a) und/oder die Geschwindigkeit (v) des mindestens einen Elements (2) hervorgerufenen Kraftanteil (Fa, Fv) der Verfahrkraft (F') ermittelt und berücksichtigt.

6. Betriebsverfahren nach einem der obigen Ansprüche,
**dadurch gekennzeichnet ,**
**dass** die Steuereinrichtung (3) die Sollgeschwindigkeit (v*) auf einen der Steuereinrichtung (3) vorgegebenen Geschwindigkeitsgrenzwert (v0) begrenzt.

7. Betriebsverfahren nach einem der obigen Ansprüche,
**dadurch gekennzeichnet ,**
**dass** die Steuereinrichtung (3) die Kontaktkraft (F) überwacht und dass die Steuereinrichtung (3) bei Erreichen des vorgegebenen Kraftgrenzwertes (F0) die Verfahrrichtung, eine Richtung der Sollgeschwindigkeit (v*) und/oder eine Richtung einer Sollkraft (Fx*) umkehrt.

8. Betriebsverfahren nach einem der obigen Ansprüche,
**dadurch gekennzeichnet ,**
**dass** die Steuereinrichtung (3) die Abfolge von Lagesollwerten (x*) und/oder die zugehörigen Lageistwerte (x) temporär in einem Pufferspeicher (16) speichert und dass die Steuereinrichtung (3) in dem Fall, dass sie nach dem Verfahren des mindestens einen Elements (2) der Produktionsmaschine in der Verfahrrichtung das mindestens eine Element (2) der Produktionsmaschine entgegen der Verfahrrichtung verfährt, die in dem Pufferspeicher (16) gespeicherten Lagesollwerte (x*) und/oder Lageistwerte (x) in gegenüber dem Speichern invertierter Reihenfolge verwertet.

9. Betriebsverfahren nach einem der obigen Ansprüche,
**dadurch gekennzeichnet ,**
**dass** die Steuereinrichtung (3) dem Bediener (6) die Kontaktkraft (F) über die Mensch-Maschine-Stelle (8) als Betrag, komponentenweise für die einzelnen Achsen (1) und/oder komponentenweise für zueinander orthogonale Richtungen anzeigt.

10. Betriebsverfahren nach einem der obigen Ansprüche,
**dadurch gekennzeichnet ,**
**dass** die Steuereinrichtung (3) ein Betätigungselement (9) zum Vorgeben des Fahrbefehls (C1) mit einer von der Kontaktkraft (F) abhängigen haptisch erfassbaren Rückmeldung (R) beaufschlagt.

11. Betriebsverfahren nach einem der obigen Ansprüche,
**dadurch gekennzeichnet ,**
**dass** die Steuereinrichtung (3) das erfindungsgemäße Verfahren nur dann ausführt, wenn die Steuereinrichtung (3) zuvor vom Bediener (6) über die Mensch-Maschine Schnittstelle (8) einen Aktivierungsbefehl (A) entgegengenommen hat.

12. Steuerprogramm für eine Steuereinrichtung (3) für eine Produktionsmaschine, wobei das Steuerprogramm Maschinencode (5) umfasst, der von der Steuereinrichtung (3) abarbeitbar ist, wobei die Abarbeitung des Maschinencodes (5) durch die Steuereinrichtung (3) bewirkt, dass die Steuereinrichtung (3) die Produktionsmaschine gemäß einem Betriebsverfahren nach einem der obigen Ansprüche betreibt.

13. Steuereinrichtung für eine Produktionsmaschine, wobei die Steuereinrichtung mit einem Steuerprogramm (4) nach Anspruch 12 programmiert ist, so dass die Steuereinrichtung im Betrieb die Produktionsmaschine gemäß einem Betriebsverfahren nach einem der Ansprüche 1 bis 11 betreibt.

14. System, umfassend eine Produktionsmaschine, wobei die Produktionsmaschine mindestens eine lagegeregelte Achse (1) aufweist, mittels derer mindestens ein Element (2) der Produktionsmaschine lagegeregelt verfahren wird, sowie eine Steuereinrichtung (3) nach Anspruch 13, mit der die Produktionsmaschine gesteuert wird.

## Claims

1. Operating method for a control device (3) for a production machine,
- wherein the control device (3) receives a present path (B) and a movement command (C1) from an operator (6) of the production machine via an input device (7) of a human-machine interface (8) during manual operation of the production machine,
- wherein at least one element (2) of the production machine is to be moved along the present path (B) in a movement direction by means of position-controlled axes (1),
- wherein the control device (3) determines a series of position setpoint values (x*) for the axes (1) on the basis of the movement command (C1),
- wherein the position setpoint values (x*) advance with a setpoint velocity (v*) in the movement direction along the present path (B),
- wherein the control device (3) determines, on the basis of the position setpoint values (x*) and corresponding position actual values (x), control commands (C2) for the drives (12) driving the axes (1) and controls the drives (12) accordingly,
- wherein the control device (3) determines the control commands (C2) such that a contact force (F), with which the at least one element (2) acts on its environment, is limited to a force limit value (FO) specified to the control device (3),
**characterised in that**
the control device (3) monitors a following error (δx) of the drives (12) for adherence to a predefined maximum value (MAX) and suppresses further movement of the at least one element (2) of the production machine if the maximum value (MAX) is reached,
wherein the control device (3) determines the control commands (C2) for the drives (12) **in that** it
- determines velocity setpoint values (v*) for the velocity controllers (13') subordinate to the position controllers (13) by means of the position controllers (13) assigned to the drives (12) on the basis of the position setpoint values (x*) and the corresponding position actual values (x),
- determines force setpoint values (Fx*) for the force controllers (14) subordinate to the velocity controllers (13') and upstream of the drives (12) on the basis of the velocity setpoint values (x*) and corresponding velocity actual values (v),
- limits the force setpoint values (Fx*) to the specified force limit value (FO) or a value derived therefrom and
- determines the control commands (C2) for the drives (12) by means of the force controller (14).

2. Operating method according to claim 1,
**characterised in that**
the contact force (F) is limited as an absolute value, component by component for the individual axes (1) and/or component by component for directions orthogonal to one another.

3. Operating method according to claim 1 or 2,
**characterised in that**
the control device (3) comprises position controllers (13) assigned to the drives (12) and force controllers (14) directly or indirectly subordinate to the position controllers (13) and the position controllers (13) are embodied as P controllers.

4. Operating method according to one of the above claims, **characterised in that**
- the control device (3) receives a measurement value (I) for a movement force (F') with which the drives (12) act on the at least one element (2),
- the control device (3) determines the contact force (F) on the basis of the received measurement value (I) and
- the control device (3) suppresses a further movement of the at least one element (2) in the movement direction if and as soon as the determined contact force (F) reaches the specified force limit value (FO).

5. Operating method according to claim 4,
**characterised in that**
the control device (3) determines an acceleration (a) and/or the movement velocity (v) of the at least one element (2) on the basis of the position actual values (x) of the axes (1) and that in the determination of the contact force (F) the control device (3) determines and takes into account a force component (Fa, Fv) of the movement force (F') caused by the acceleration (a) and/or the velocity (v) of the at least one element (2).

6. Operating method according to one of the above claims, **characterised in that**
the control device (3) limits the setpoint velocity (v*) to a velocity limit value (v0) specified to the control device (3).

7. Operating method according to one of the above claims, **characterised in that**
the control device (3) monitors the contact force (F) and that the control device (3), when the specified force limit value (FO) is reached, reverses the movement direction, a direction of the setpoint velocity (v*) and/or a direction of a setpoint force (Fx*).

8. Operating method according to one of the above claims, **characterised in that**
the control device (3) temporarily stores the series of position setpoint values (x*) and/or the associated position actual values (x) in a buffer memory (16) and that the control device (3), in the event that it moves the at least one element (2) of the production machine counter to the movement direction after the movement of at least one element (2) of the production machine in the movement direction, utilizes the position setpoint values (x*) and/or position actual values (x) stored in the buffer memory (16) in a sequence which is inverse compared to that of the storage.

9. Operating method according to one of the above claims, **characterised in that**
the control device (3) displays to the operator (6) the contact force (F) via the human-machine interface (8) as an absolute value, component by component for the individual axes (1) and/or component by component for directions orthogonal to one another.

10. Operating method according to one of the above claims, **characterised in that**
the control device (3) applies a haptically detectable acknowledgment (R) dependent on the contact force (F) to an actuating element (9) for specifying the movement command (C1).

11. Operating method according to one of the above claims, **characterised in that**
the control device (3) executes the inventive method only if the control device (3) has previously received an activation command (A) from the operator (6) via the human-machine interface (8).

12. Control program for a control device (3) of a production machine, wherein the control program comprises machine code (5) which can be processed by the control device (3), wherein the processing of the machine code (5) by the control device (3) causes the control device (3) to operate the production machine according to an operating method according to one of the above claims.

13. Control device for a production machine, wherein the control device is programmed with a control program (4) according to claim 12, such that the control device operates the production machine according to an operating method according to one of claims 1 to 11 during operation.

14. System, comprising a production machine, wherein the production machine has at least one position-controlled axis (1) by means of which at least one element (2) of the production machine is moved in a position-controlled manner, and a control device (3) according to claim 13, with which the production machine is controlled.

## Revendications

1. Procédé de fonctionnement d'un dispositif (3) de commande d'une machine de production,
- dans lequel le dispositif (3) de commande reçoit, d'un opérateur (6) de la machine de production, en un fonctionnement manuel de la machine de production, une trajectoire (B) instantanée et une instruction (C1) de déplacement par l'intermédiaire d'un dispositif (7) d'entrée d'une interface (8) homme-machine,
- dans lequel au moins un élément (2) de la machine de production doit, au moyen d'axes (1) réglés en position, être déplacé dans un sens de déplacement le long de la trajectoire (B) instantanée,
- dans lequel le dispositif (3) de commande détermine, sur la base de l'instruction (C1) de déplacement, une succession de valeurs (x*) de consigne de position pour les axes (1),
- dans lequel les valeurs (x*) de consigne de position progressent avec une vitesse (v*) de consigne dans le sens de déplacement le long de la trajectoire (B) instantanée,
- dans lequel le dispositif (3) de commande détermine, à l'aide des valeurs (x*) de consigne de position et de valeurs (x) réelles de position correspondantes, des instructions (C2) de commande d'entraînements (12) entraînant les axes (1) et commande en conséquence les entraînements (12),
- dans lequel le dispositif (3) de commande détermine les instructions (C2) de commande, de manière à limiter à une valeur (F0) limite de force, donnée à l'avance au dispositif (3) de commande, un force (F) de contact, par laquelle le au moins un élément (2) agît sur son environnement,
**caractérisé**
**en ce que** le dispositif (3) de commande contrôle qu'une erreur (δx) de poursuite des entraînements (12) respecte une valeur (MAX) maximum déterminée à l'avance et, lorsque la valeur (MAX) maximum est atteinte, supprime la continuation du déplacement du au moins un élément (2) de la machine de production,
dans lequel le dispositif (3) de commande détermine les instructions (C2) de commande des entraînements (12), par le fait qu'il
- au moyen de régleurs (13) de position affectés aux entraînements (12), à l'aide des valeurs (x*) de consigne de position et des valeurs (x) réelles de position correspondantes, détermine des valeurs (v*) de consigne de vitesse des régleurs (13') de vitesse pour les régleurs (13') de vitesse subordonnés aux régleurs (13) de position,
- à l'aide des valeurs (x*) de consigne de vitesse et de valeurs (v) réelles de vitesse correspondantes, détermine des valeurs (Fx*) de consigne de force pour les régleurs (14) de force subordonnés aux régleurs (13') de vitesse, ainsi que montés avant les entraînements (12),
- limite les valeurs (Fx*) de consigne de force à la valeur (FO) limite de force donnée à l'avance ou à une valeur, qui s'en déduit, et
- détermine les instructions (C2) de commande des entraînements (12) au moyen des régleurs (14) de force.

2. Procédé de fonctionnement suivant la revendication 1, **caractérisé**
**en ce que** l'on limite la force (F) de contact, comme valeur absolue, composant par composant pour les divers axes (1) et/ou composant par composant pour des directions orthogonales entre elles.

3. Procédé de fonctionnement suivant la revendication 1 ou 2, **caractérisé**
**en ce que** le dispositif (3) de commande comprend des régleurs (14) de force subordonnés directement ou indirectement aux régleur (13) de position et aux régleurs (13) de position associés aux entraînements (12) et les régleurs (13) de position sont constitués sous la forme de régleurs P.

4. Procédé de fonctionnement suivant l'une des revendications précédentes,
**caractérisé**
- **en ce que** le dispositif (3) de commande reçoit une valeur (I) de mesure d'une force (F') de déplacement, par laquelle les entraînements (12) agissent sur le au moins un élément (2),
- **en ce que** le dispositif (3) de commande détermine la force (F) de contact à l'aide de la valeur (I) de mesure reçue, et
- **en ce que** le dispositif (3) de commande supprime un autre déplacement du au moins un élément (2) dans la direction de déplacement, si et dès que la force (F) de contact déterminée atteint la valeur (FO) limite de force donnée à l'avance.

5. Procédé de fonctionnement suivant la revendication 4, **caractérisé**
**en ce que** le dispositif (3) de commande détermine, à l'aide des valeurs (x) réelles de position des axes (1), une accélération (a) et/ou la vitesse (v) de déplacement du au moins un élément (2), et en ce que le dispositif (3) de commande, lors de la détermination de la force (F) de contact, détermine et prend en compte une proportion (Fa, Fv) de la force (F') de déplacement provoquée par l'accélération (a) et/ou la vitesse (v) du au moins un élément (2).

6. Procédé de fonctionnement suivant l'une des revendications précédentes,
**caractérisé**
**en ce que** le dispositif (3) de commande limite la vitesse (v*) de consigne à une valeur (v0) limite de vitesse donnée à l'avance au dispositif (3) de commande.

7. Procédé de fonctionnement suivant l'une des revendications précédentes,
**caractérisé**
**en ce que** le dispositif (3) de commande contrôle la force (F) de contact et en ce que le dispositif (3) de commande inverse, lorsque la valeur (F0) limite de force donnée à l'avance est atteinte, le sens de déplacement, une direction de la vitesse (v*) de consigne et/ou une direction d'une force (Fx*) de consigne.

8. Procédé de fonctionnement suivant l'une des revendications précédentes,
**caractérisé**
**en ce que** le dispositif (3) de commande met, temporairement dans une mémoire (16) tampon, la succession de valeurs (x*) de consigne de position et/ou les valeurs (x) réelles de position, qui leur appartiennent, et en ce que le dispositif (3) de commande déplace, dans le sens contraire au sens de déplacement, après le déplacement du au moins un élément (2) de la machine de production dans le sens de déplacement, le au moins un élément (2) de la machine de production, qui évalue, dans la succession inverse par rapport à la mémoire, les valeurs (x*) de consigne de position mises dans la mémoire (16) tampon et/ou les valeurs (x) réelles de position.

9. Procédé de fonctionnement suivant l'une des revendications précédentes,
**caractérisé**
**en ce que** le dispositif (3) de commande indique, à l'opérateur (6), la force (F) de contact par l'intermédiaire de l'interface (8) homme-machine, comme valeur absolue, composante par composante pour les divers axes (1) et/ou composante par composante pour des directions orthogonales entre elles.

10. Procédé de fonctionnement suivant l'une des revendications précédentes,
**caractérisé**
**en ce que** le dispositif (3) de commande alimente un élément (9) d'actionnement pour la prescription de l'instruction (C1) de déplacement par un message (R) en retour pouvant être détecté optiquement en fonction de la force (F) de contact.

11. Procédé de fonctionnement suivant l'une des revendications précédentes,
**caractérisé**
**en ce que** le dispositif (3) de commande exécute le procédé suivant l'invention seulement lorsque le dispositif (3) de commande a reçu auparavant de l'opérateur (6) une instruction (A) d'activation par l'intermédiaire de l'interface (8) homme-machine.

12. Programme de commande d'un dispositif (3) de commande d'une machine de production, dans lequel le programme de commande comprend un code (5) machine, qui peut être élaboré par le dispositif (3) de commande, dans lequel l'élaboration du code (5) machine par le dispositif (3) de commande fait que le dispositif (3) de commande fait fonctionner la machine de production suivant un procédé de fonctionnement suivant l'une des revendications précédentes.

13. Dispositif de commande d'une machine de production, dans lequel le dispositif de commande est programmé par un programme (4) de commande suivant la revendication 12, de sorte que le dispositif de commande fait fonctionner en fonctionnement la machine de production suivant un procédé de fonctionnement suivant l'une des revendications 1 à 11.

14. Système comprenant une machine de production, dans lequel la machine de production a au moins un axe (1) réglé en position, au moyen duquel au moins un élément (2) de la machine de production est déplacé d'une manière réglée en position, ainsi qu'un dispositif (3) de commande suivant la revendication 13, par lequel la machine de production est commandée.
